# EUROPEAN PATENT APPLICATION

(11) **EP 4 250 539 A1**
(43) Date of publication of application: **27.09.2023**
(21) Application number: 23164134.1
(22) Date of filing: 24.03.2023
(51) Int. Cl.: H02K 3/12, H02K 15/04, H02K 15/06

(54) **STATOR AND COIL MANUFACTURING DEVICE**

(30) Priority: 25.03.2022 CN 202210299204
(71) Applicant: Nidec Corporation, Kyoto-shi, Kyoto 601-8205 (JP)
(72) Inventor: SUGIYAMA, Koji, Kyoto 601-8205 (JP)
(74) Representative: Viering, Jentschura & Partner mbB Patent- und Rechtsanwälte

(57) **Abstract**

A stator (1) includes a cylindrical stator core (3) having a plurality of slots on an inner peripheral side, a first coil (5) having an annular shape and partially located in two first coil slots (41), and a second coil (6) having an annular shape and partially located in two second coil slots (42). The first coil (5) has two first coil end portions (52). The second coil (6) has two second coil end portions (62). The one second coil slot (42) is located on one side in the circumferential direction with respect to the first coil slot (41) located on one side in the circumferential direction of the two first coil slots (41). The other second coil slot (42) is located on the other side in the circumferential direction with respect to the first coil slot (41) located on the other side in the circumferential direction. The sum of the lengths of the two second coil end portions (62) is 1.3 times or more than 1.3 times the sum of the lengths of the two first coil end portions (52).

## Description

### Technical Field

The present invention relates to a stator and a coil manufacturing device for manufacturing a coil for the stator.

### Background Art

In a method for manufacturing a stator, a method for inserting an annular coil from the radially inner side of a stator core into a slot located between teeth of a cylindrical stator core is known. Patent Literature 1 discloses an example of a method for inserting an annular coil into a slot of a stator core.

Patent Literature 1 discloses a coil insertion method in which a coil is held by first and second movable blades that are relatively movable in an axial direction, the coil is pressed by a stripper, and the coil is inserted into a slot between internal teeth of the stator core. Further, Patent Literature 1 discloses that after the first and second movable blades and the stripper are advanced until the coil is inserted into a predetermined position of the stator core, the first movable blade is further advanced together with the stripper, and at the same time, the second movable blade is retracted. The length of the coil end protruding from the second stator core is suppressed to be short by the second movable blade.

### Citation List

### Patent Literature

Patent Literature 1: JP 2000-125521 A

### Summary of Invention

### Technical Problem

In the coil insertion method disclosed in Patent Literature 1, an annular coil is moved radially inward of the stator core from one side to the other side in an axial direction of the stator core, and the annular coil is inserted into the slot. By moving the annular coil in the axial direction with respect to the slot of the stator core, a part of the annular coil is inserted into the two slots.

A plurality of coils are inserted into a plurality of slots of the stator core. When the coil is attached to the stator core, for example, an annular first coil may be inserted into two first coil slots, and an annular second coil may be inserted into a second coil slot located on one side of the two first coil slots in the circumferential direction with respect to the first coil slot located on one side in the circumferential direction, and a second coil slot located on the other side in the circumferential direction with respect to the first coil slot located on the other side of the two first coil slots in the circumferential direction.

Meanwhile, in the stator, the first coil end portion of the first coil is located axially outward of the first coil slot. A second coil end portion of the second coil is located axially outward of the second coil slot. Therefore, in a case where the first coil and the second coil are simultaneously attached to the stator core, if the second coil end portion is short, there is a possibility that a contact area between the first coil end portion and the second coil end portion becomes large outside the stator core in the axial direction. In a case where the second coil end portion is located radially outward of the first coil end portion, if the contact area is large, there is a possibility that resistance generated when the first coil is inserted into the first coil slot increases due to a force of the second coil end portion pushing the first coil end portion radially inward of the stator.

As a result, a large force may be required when the first coil is inserted into the first coil slot. Since the coil can be smoothly inserted into the slot of the stator core, a configuration of a stator that can be efficiently produced is required.

An object of the present invention is to realize a configuration of a stator in which a coil can be smoothly inserted into a slot of a stator core and which can be efficiently produced.

### Solution to Problem

A stator according to an exemplary embodiment of the present invention includes: a cylindrical stator core having a plurality of slots that open radially inward and are arranged in a circumferential direction on an inner peripheral side; a first coil having an annular shape and partially located in two first coil slots of the plurality of slots; and a second coil having an annular shape and partially located in two second coil slots of the plurality of slots. The first coil includes: two first coil linear portions located in the two first coil slots; and two first coil end portions connecting the two first coil linear portions axially outward of the first coil slot. The second coil includes: two second coil linear portions located in the two second coil slots; and two second coil end portions connecting the two second coil linear portions axially outward of the second coil slot. One second coil slot of the two second coil slots is located on one side in the circumferential direction with respect to the first coil slot located on one side in the circumferential direction of the two first coil slots, and another second coil slot is located on another side in the circumferential direction with respect to the first coil slot located on another side in the circumferential direction. The sum of the lengths of the two second coil end portions is 1.3 times or more than 1.3 times the sum of the lengths of the two first coil end portions.

In addition, a coil manufacturing device according to an exemplary embodiment of the present invention manufactures an annular coil that is open radially inward of a cylindrical stator core and partially inserted into a plurality of slots arranged in a circumferential direction on an inner peripheral side of the stator core using a wire. The coil manufacturing device includes a first winding frame and a second winding frame. In the first winding frame, the wire is wound around a first central axis to form an annular first coil having a pair of first coil linear portions and a pair of first coil end portions. In the second winding frame, the wire is wound around a second central axis to form an annular second coil having a pair of second coil linear portions and a pair of second coil end portions. The first winding frame has a shape elongated in one direction when the first winding frame is viewed in the axial direction of the first central axis. The second winding frame has a shape elongated in one direction when the second winding frame is viewed in the axial direction of the second central axis. The first winding frame includes a first linear forming portion that forms the first coil linear portion of the first coil, and a pair of first coil end forming portions that is located on both sides outward in a longitudinal direction of the first winding frame with respect to the first linear forming portion, and forms the first coil end portion of the first coil. The second winding frame includes a second linear forming portion that forms the second coil linear portion of the second coil, and a pair of second coil end forming portions that is located on both sides outward in a longitudinal direction of the second winding frame with respect to the second linear forming portion, and forms the second coil end portion of the second coil. When the second winding frame is viewed in an axial direction of the second central axis, a sum of lengths of portions of the pair of second coil end forming portions with which the wire is in contact is 1.3 times or more than 1.3 times a sum of lengths of portions of the pair of first coil end forming portions with which the wire is in contact when the first winding frame is viewed in an axial direction of the first central axis.

### Advantageous Effects of Invention

According to the stator and the coil manufacturing device according to an exemplary embodiment of the present invention, since the coil can be smoothly inserted into the slot of the stator core, the configuration of the stator that can be efficiently produced can be realized.

### Brief Description of Drawings

Fig. 1 is a cross-sectional view illustrating a schematic configuration of a motor having a stator according to an embodiment.
Fig. 2 is a view of a stator core according to the embodiment as viewed in an axial direction.
Fig. 3 is a partially enlarged view of the stator according to the embodiment as viewed in the axial direction.
Fig. 4 is a developed view of a part of an inner peripheral surface of the stator according to the embodiment.
Fig. 5 is a diagram illustrating an example of an overall configuration of a coil forming device according to an embodiment.
Fig. 6 is a diagram illustrating an example of a first winding frame and a second winding frame according to the embodiment.
Fig. 7 is a diagram illustrating an example of the first winding frame and the second winding frame according to the embodiment.
Fig. 8 is a diagram illustrating an example of a coil insertion device according to an embodiment.
Fig. 9 is a diagram illustrating an example of a coil insertion device according to an embodiment.
Fig. 10 is a diagram illustrating an example of a coil insertion device according to an embodiment.
Fig. 11 is a graph illustrating an example of a temporal change in torque of a stripper moving motor.

### Description of Embodiments

Hereinafter, an exemplary embodiment of the present invention will be described in detail with reference to the drawings. In the respective drawings, identical or corresponding portions are denoted with identical reference signs; therefore, the description thereof will not be given repeatedly. In addition, the respective drawings do not faithfully illustrate the dimensions of actual constituent members, the dimensional ratios of the constituent members, and the like.

It is assumed herein that a direction parallel to a central axis P0 of a stator core 3 of a stator 1 is referred to as the term "axial direction", "axial", or "axially", that a direction perpendicular to the central axis P0 is referred to as the term "radial direction", "radial", or "radially", and that a direction along a circular arc centered on the central axis P0 is referred to as the term "circumferential direction", "circumferential", or "circumferentially". However, there is no intention to limit the direction at the time of using the stator 1 according to the present invention by the definitions of the directions.

In the following description, the expression "fix", "connect", "attach", or the like (hereinafter, fix or the like) is used not only when members are directly fixed or the like to each other, but also when members are fixed or the like to each other with another member interposed therebetween. That is, in the following description, the expression "fix or the like" includes the meaning of direct and indirect fixation or the like of members.

### (Stator)

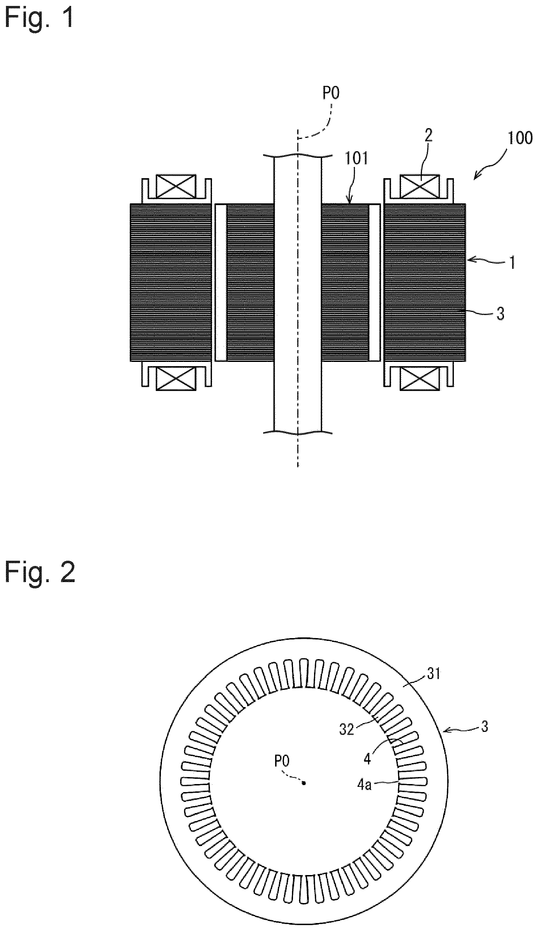

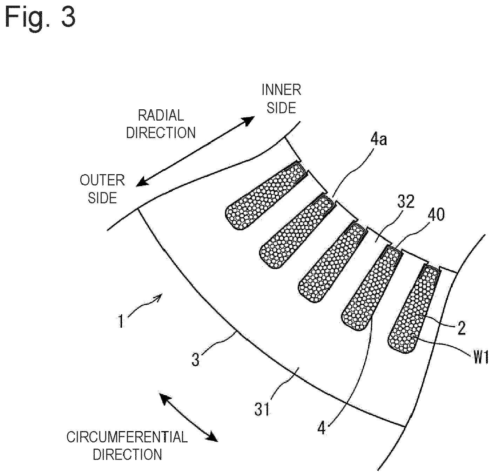

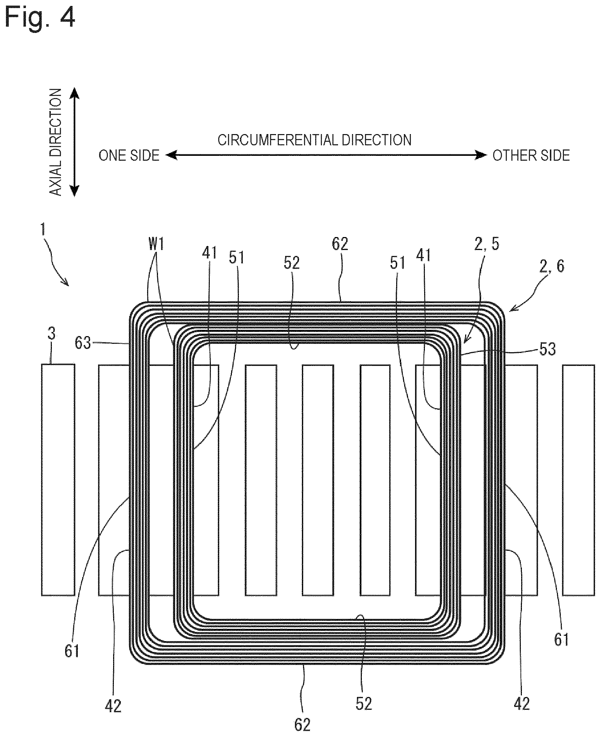

An example of the stator 1 according to an embodiment will be described with reference to Figs. 1 to 4. Fig. 1 is a cross-sectional view illustrating a schematic configuration of a motor 100 including the stator 1 according to an embodiment. Fig. 2 is a view of the stator core 3 of the motor 100 as viewed in the axial direction. Fig. 3 is a partially enlarged view of the stator 1 as viewed in the axial direction. Fig. 4 is a developed view of a part of the inner peripheral surface of the stator 1 according to the embodiment.

As illustrated in Fig. 1, the motor 100 includes a rotor 101 in addition to the stator 1. The stator 1 has a cylindrical shape and includes a plurality of coils 2. The rotor 101 has a columnar shape. The rotor 101 is rotatable about the central axis P0 on the radially inside of the stator 1. In the present embodiment, the motor 100 is a so-called inner rotor type motor 100 in which the rotor 101 is located radially inward of the stator 1. Since the configuration of the rotor 101 is similar to the conventional configuration, the description thereof will be omitted.

As illustrated in Figs. 2 and 3, the stator 1 includes a cylindrical stator core 3 and a coil 2. The stator core 3 includes an annular core back 31 and a plurality of teeth 32.

The plurality of teeth 32 are arranged in the circumferential direction radially inward of the core back 31, and extend radially inward from the radially inside of the core back 31.

The stator core 3 has a plurality of slots 4 located between the teeth 32 adjacent in the circumferential direction of the stator core 3. An opening portion 4a of the slot 4 is located between the tip portions of the teeth 32 adjacent in the circumferential direction. In this manner, the slots 4 are arranged on the inner peripheral side in the circumferential direction and open radially inward.

The coil 2 is inserted into the slot 4 of the stator core 3. The coil 2 is configured by winding a wire W1 a plurality of times. The wire W1 is located in the slot 4 into which the coil 2 is inserted. The wire W1 is, for example, a copper wire having an insulating film. However, the wire W1 is not limited to a copper wire, and may be made of a material having conductivity.

The plurality of coils 2 includes a first coil 5 and a second coil 6. Fig. 4 illustrates an example of a state in which the first coil 5 and the second coil 6 among the plurality of coils 2 are inserted into the slot 4 of the stator core 3. As illustrated in Fig. 4, each of the first coil 5 and the second coil 6 has an annular shape. For example, the first coil 5 and the second coil 6 may be coils of the same phase or coils of different phases.

The plurality of slots 4 includes two first coil slots 41 and two second coil slots 42. The first coil 5 is partially located in two first coil slots 41 among the plurality of slots 4. The second coil 6 is partially located in two second coil slots 42 among the plurality of slots 4.

As illustrated in Fig. 4, the second coil slot 42 located on one side in the circumferential direction of the two second coil slots 42 is adjacent to the first coil slot 41 at a position on one side in the circumferential direction with respect to the first coil slot 41 located on one side in the circumferential direction of the two first coil slots 41. In addition, the second coil slot 42 located on the other side in the circumferential direction of the two second coil slots 42 is adjacent to the first coil slot 41 at a position on the other side in the circumferential direction with respect to the first coil slot 41 located on the other side in the circumferential direction of the two first coil slots 41.

One second coil slot 42 of the two second coil slots 42 may be located on one side in the circumferential direction with respect to the first coil slot 41 located on one side in the circumferential direction of the two first coil slots 41. The other second coil slot 42 of the two second coil slots 42 may be located at the other side in the circumferential direction with respect to the first coil slot 41 located at the other side in the circumferential direction. That is, the first coil slot 41 and the second coil slot 42 may not be adjacent to each other.

As illustrated in Fig. 4, the first coil 5 includes two first coil linear portions 51 and two first coil end portions 52. The first coil linear portion 51 is a portion of the first coil 5 located in the first coil slot 41. The first coil end portion 52 protrudes axially outward from the first coil slot 41 and connects the two first coil linear portions 51. The first coil end portion 52 has first base end portions 53 at both ends. The first base end portion 53 is a linear portion that is located at a connection portion of the first coil end portion 52 with the first coil linear portion 51 and extends in the axial direction.

As illustrated in Fig. 4, the second coil 6 includes two second coil linear portions 61 and two second coil end portions 62. The second coil linear portion 61 is a portion of the second coil 6 located in the second coil slot 42. The second coil end portion 62 protrudes axially outward from the second coil slot 42 and connects the two second coil linear portions 61. The second coil end portion 62 has second base end portions 63 at both ends. The second base end portion 63 is a linear portion that is located at a connection portion of the second coil end portion 62 with the second coil linear portion 61 and extends in the axial direction.

The sum of the lengths of the two second coil end portions 62 is 1.3 times or more than 1.3 times the sum of the lengths of the two first coil end portions 52. That is, the value obtained by subtracting the total length of the wires W1 of the two second coil linear portions 61 from the total length of the wires W1 constituting the second coil 6 is 1.3 times or more than 1.3 times the value obtained by subtracting the total length of the wires W1 of the two first coil linear portions 51 from the total length of the wires W1 constituting the first coil 5.

The sum of the lengths of the two second coil end portions 62 is 1.3 times or more than 1.3 times the sum of the lengths of the two first coil end portions 52. As illustrated in Fig. 4, when the stator 1 is viewed in the radial direction, the first coil end portion 52 and the second coil end portion 62 partially come into contact with each other. However, when the sum of the lengths of the two second coil end portions 62 is 1.3 times or more the sum of the lengths of the two first coil end portions 52, the contact area between the first coil end portion 52 and the second coil end portion 62 can be reduced as compared with the case where the sum of the lengths of the two second coil end portions 62 is the same as the sum of the lengths of the two first coil end portions 52. Fig. 4 illustrates an example in which the first coil 5 is surrounded by the second coil 6 when the first coil 5 and the second coil 6 are viewed in the radial direction.

The total length of the wire W1 of the second coil linear portion 61 can be calculated by multiplying the number of wires W1 of the second coil 6 in the second coil slot 42 by the axial length of the second coil slot 42. The total length of the wire W1 of the first coil linear portion 51 can be calculated by multiplying the number of wires W1 of the first coil 5 in the first coil slot 41 by the axial length of the first coil slot 41.

As illustrated in Fig. 3, a wedge 40 is inserted into the slot 4. The wedge 40 is a resin member extending in the axial direction. The wedge 40 may be made of a material other than resin. The wedge 40 is inserted into the slot 4 on the opening portion 4a side. The wedge 40 is located on the radially inside of the two first coil linear portions 51 of the first coil 5 and on the radially outside of the opening portion 4a of the first coil slot 41 in the two first coil slots 41. In the two second coil slots 42, the wedge 40 is located on the radially inside of the two second coil linear portions 61 of the second coil 6 and the radially outside of the opening portion 4a of the second coil slot 42.

### (Coil manufacturing device)

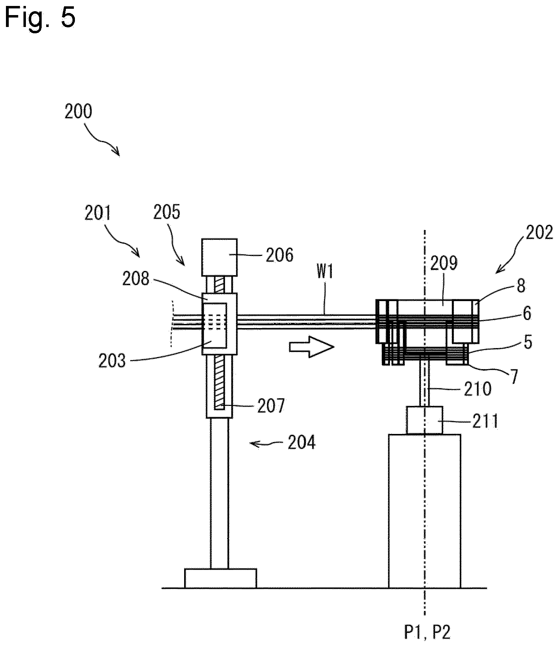

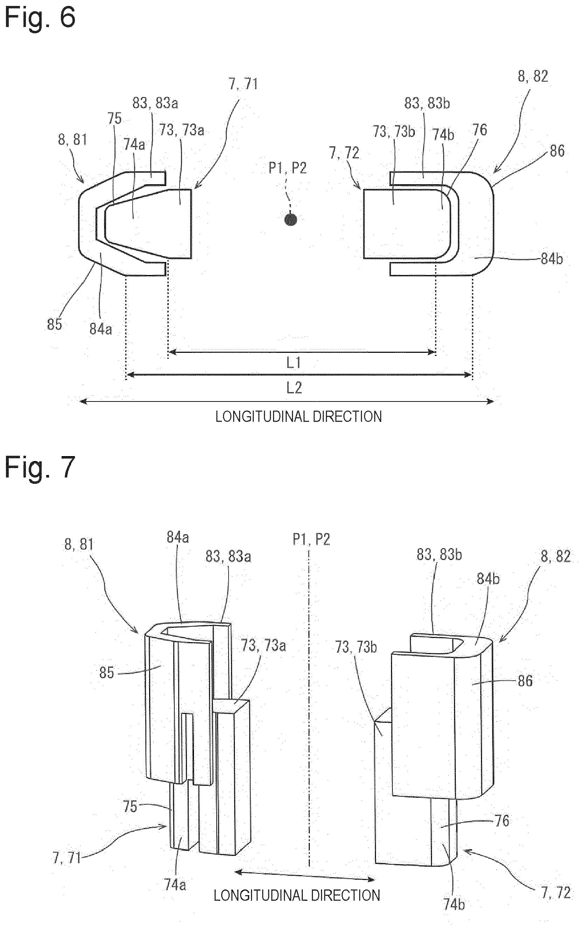

Next, an example of the coil manufacturing device 200 according to the embodiment will be described with reference to Figs. 5 to 7. Fig. 5 is a diagram illustrating an example of an overall configuration of a coil manufacturing device 200 according to the embodiment. Figs. 6 and 7 are diagrams illustrating examples of a first winding frame 7 and a second winding frame 8 according to the embodiment.

The coil manufacturing device 200 manufactures the first coil 5 and the second coil 6. The coil manufacturing device 200 includes a wire feeding unit 201 and a wire winding unit 202. The wire winding unit 202 is located downstream of the wire feeding unit 201 in the wire feeding direction. In Fig. 5, the wire feeding direction is indicated by a white arrow.

### (Wire Feeding Unit)

A plurality of wires W1 are fed to the wire feeding unit 201 from a plurality of bobbins (not illustrated). The wire feeding unit 201 feeds the wire W1 to the wire winding unit 202. As illustrated in Fig. 5, the wire feeding unit 201 includes a delivery main body 203 and a delivery portion support 204. The delivery main body 203 has, for example, a columnar shape. The delivery main body 203 has a plurality of through holes (not illustrated). The plurality of through holes are arranged, for example, in a direction orthogonal to the wire feeding direction. In the plurality of through holes, one wire W1 penetrates each through hole. The plurality of wires W1 having passed through the delivery main body 203 are fed to the wire winding unit 202.

As illustrated in Fig. 5, the delivery portion support 204 supports the delivery main body 203. The delivery portion support 204 includes a delivery portion moving unit 205. For example, the delivery portion moving unit 205 includes a moving motor 206, a ball screw 207, and a slide table 208. The moving motor 206 rotates the ball screw 207. The delivery main body 203 is fixed to one surface of the flat surface of the slide table 208. The slide table 208 includes a nut (not illustrated) on a surface opposite to a surface to which the wire feeding unit 201 is fixed. The ball screw 207 is inserted into the hole of the nut.

The moving motor 206 is rotatable in both the forward direction and the reverse direction. As the moving motor 206 rotates, the slide table 208 and the delivery main body 203 fixed to the slide table 208 move in the axial direction of a first central axis P1 and a second central axis P2 to be described later.

### (Wire Winding Unit)

The wire winding unit 202 includes a first winding frame 7, a second winding frame 8, a winding frame support 209, a rotation shaft 210, and a winding motor 211. By winding the wire W1 fed from the wire feeding unit 201 around the first winding frame 7 and the second winding frame 8, the wire winding unit 202 forms the first coil 5 and the second coil 6.

Specifically, in the first winding frame 7, the wire W1 is wound around the first central axis P1 to form the annular first coil 5 having the two first coil linear portions 51 and the two first coil end portions 52. In the second winding frame 8, the wire W1 is wound around the second central axis P2 to form the annular second coil 6 having two second coil linear portions 61 and two second coil end portions 62. In the coil manufacturing device 200, the first central axis P1 and the second central axis P2 are located on the same straight line. The first central axis P1 and the second central axis P2 may be disposed in parallel.

The winding frame support 209 is, for example, a plate-like member, and supports the first winding frame 7 and the second winding frame 8. The central axis of the rotation shaft 210 is located on the same straight line as the first central axis P1 and the second central axis P2. One axial end of the rotation shaft 210 is connected to the winding frame support 209. The other axial end of the rotation shaft 210 is connected to the winding motor 211. When the winding motor 211 rotates, the first winding frame 7 and the second winding frame 8 rotate about the rotation shaft 210. In the coil manufacturing device 200 of the embodiment, the central axis of the rotation shaft 210 is the first central axis P1 and the second central axis P2.

### (First winding frame and second winding frame)

Next, details of the first winding frame 7 and the second winding frame 8 will be described with reference to Figs. 6 and 7. Fig. 6 is a view of the first winding frame 7 as viewed in the axial direction of the first central axis P1, and a view of the second winding frame 8 as viewed in the axial direction of the second central axis P2.

As illustrated in Figs. 6 and 7, the first winding frame 7 is divided into a first divided winding frame portion 71 and a second divided winding frame portion 72. The first divided winding frame portion 71 and the second divided winding frame portion 72 face each other at positions separated from each other with the first central axis P1 interposed therebetween. The second winding frame 8 is divided into a third divided winding frame portion 81 and a fourth divided winding frame portion 82. The third divided winding frame portion 81 and the fourth divided winding frame portion 82 face each other at positions separated from each other with the second central axis P2 interposed therebetween.

As illustrated in Fig. 6, when the first divided winding frame portion 71 and the second divided winding frame portion 72 are viewed in the axial direction of the first central axis P1, the first winding frame 7 has a shape elongated in one direction. When the third divided winding frame portion 81 and the fourth divided winding frame portion 82 are viewed in the axial direction of the second central axis P2, the second winding frame 8 has a shape elongated in one direction as a whole.

As illustrated in Fig. 7, the first winding frame 7 and the second winding frame 8 are arranged in the axial direction of the first central axis P1 and the axial direction of the second central axis P2. A part of the first divided winding frame portion 71 of the first winding frame 7 is located inside the third divided winding frame portion 81 of the second winding frame 8. A part of the second divided winding frame portion 72 of the first winding frame 7 is located inside the fourth divided winding frame portion 82 of the second winding frame 8.

The first winding frame 7 includes a first linear forming portion 73. Specifically, the first divided winding frame portion 71 of the first winding frame 7 has a first divided linear forming portion 73a constituting a part of the first linear forming portion 73. The second divided winding frame portion 72 includes a first divided linear forming portion 73b constituting a part of the first linear forming portion 73. The first linear forming portion 73 is a part that forms the first coil linear portion 51 of the first coil 5. When the first winding frame 7 is viewed in the axial direction of the first central axis P1, the first divided linear forming portions 73a and 73b have a pair of side surfaces parallel to the longitudinal direction.

The first winding frame 7 includes a pair of first coil end forming portions 74a and 74b. The first coil end forming portions 74a and 74b are located on both sides outward in the longitudinal direction of the first winding frame 7 with respect to the first linear forming portion 73. The first coil end forming portions 74a and 74b are portions that form the first coil end portion 52 of the first coil 5.

When the first divided winding frame portion 71 is viewed in the axial direction of the first central axis P1, the first coil end forming portion 74a is located outward in the longitudinal direction of the first winding frame 7 with respect to the first divided linear forming portion 73a of the first divided winding frame portion 71. In addition, when the second divided winding frame portion 72 is viewed in the axial direction of the first central axis P1, the first coil end forming portion 74b of the second divided winding frame portion 72 is located outward in the longitudinal direction of the first winding frame 7 with respect to the first divided linear forming portion 73b of the second divided winding frame portion 72.

The first coil end forming portion 74a of the first divided winding frame portion 71 has a first coil end contact portion 75. When the first divided winding frame portion 71 is viewed in the axial direction of the first central axis P1, the first coil end contact portion 75 is located outside the first winding frame 7 in the longitudinal direction. The width of the first coil end contact portion 75 is narrower toward the center in the direction orthogonal to the longitudinal direction of the first winding frame 7 as it goes outward in the longitudinal direction of the first winding frame 7. In the example illustrated in Fig. 6, the first coil end contact portion 75 has a trapezoidal shape when the first divided winding frame portion 71 is viewed in the axial direction of the first central axis P1.

The first coil end forming portion 74b of the second divided winding frame portion 72 has a second coil end contact portion 76. When the second divided winding frame portion 72 is viewed in the axial direction of the first central axis P1, the second coil end contact portion 76 is located outside the first winding frame 7 in the longitudinal direction. The width of the second coil end contact portion 76 is narrower toward the center in the direction orthogonal to the longitudinal direction of the first winding frame 7 as it goes outward in the longitudinal direction of the first winding frame 7. In the example illustrated in Fig. 6, the shape of the second coil end contact portion 76 is a curved surface protruding outward in the longitudinal direction of the first winding frame 7 when the second divided winding frame portion 72 is viewed in the axial direction of the first central axis P1.

As illustrated in Fig. 6, when the first winding frame 7 is viewed in the axial direction of the first central axis P1, the shortest distance L1 from the first coil end forming portion 74a of the first divided winding frame portion 71 to the first coil end forming portion 74b of the second divided winding frame portion 72 is equal to or longer than the axial length of the slot 4 of the stator 1. As a result, the first coil linear portion 51 longer than the axial length of the slot 4 is formed.

As illustrated in Figs. 6 and 7, the second winding frame 8 includes a second linear forming portion 83. Specifically, the third divided winding frame portion 81 of the second winding frame 8 has a second divided linear forming portion 83a constituting a part of the second linear forming portion 83. The fourth divided winding frame portion 82 has a second divided linear forming portion 83b constituting a part of the second linear forming portion 83. The second linear forming portion 83 is a portion that forms the second coil linear portion 61 of the second coil 6. The second divided linear forming portions 83a and 83b have a pair of side surfaces parallel to the longitudinal direction when the second winding frame 8 is viewed in the axial direction of the second central axis P2 in each divided winding frame portion.

The second winding frame 8 includes a pair of second coil end forming portions 84a and 84b. The second coil end forming portions 84a and 84b are located on both sides outward in the longitudinal direction of the second winding frame 8 with respect to the second linear forming portion 83. The second coil end forming portions 84a and 84b are portions that form the second coil end portion 62 of the second coil 6.

When the third divided winding frame portion 81 is viewed in the axial direction of the second central axis P2, the second coil end forming portion 84a is located outward in the longitudinal direction of the second winding frame 8 with respect to the second divided linear forming portion 83a of the third divided winding frame portion 81. In addition, when the fourth divided winding frame portion 82 is viewed in the axial direction of the second central axis P2, the second coil end forming portion 84b of the fourth divided winding frame portion 82 is located outward in the longitudinal direction of the second winding frame 8 with respect to the second divided linear forming portion 83b of the fourth divided winding frame portion 82.

The second coil end forming portion 84a of the third divided winding frame portion 81 has a third coil end contact portion 85. The third coil end contact portion 85 is located outside the second winding frame 8 in the longitudinal direction when the third divided winding frame portion 81 is viewed in the axial direction of the second central axis P2. The width of the third coil end contact portion 85 is narrower toward the center in the direction orthogonal to the longitudinal direction of the second winding frame 8 as it goes outward in the longitudinal direction of the second winding frame 8. In the example illustrated in Fig. 6, the third coil end contact portion 85 has a trapezoidal shape when the third divided winding frame portion 81 is viewed in the axial direction of the second central axis P2.

The second coil end forming portion 84b of the fourth divided winding frame portion 82 has a fourth coil end contact portion 86. The fourth coil end contact portion 86 is located outside the second winding frame 8 in the longitudinal direction when the fourth divided winding frame portion 82 is viewed in the axial direction of the first central axis P1. The width of the fourth coil end contact portion 86 is narrower toward the center in the direction orthogonal to the longitudinal direction of the second winding frame 8 as it goes outward in the longitudinal direction of the second winding frame 8. In the example illustrated in Fig. 6, the shape of the fourth coil end contact portion 86 is a curved surface protruding outward in the longitudinal direction of the second winding frame 8 when the fourth divided winding frame portion 82 is viewed in the axial direction of the second central axis P2.

Then, when the second winding frame 8 is viewed in the axial direction of the second central axis P2, the sum of the lengths of the portions of the pair of second coil end forming portions 84a and 84b with which the wires W1 are in contact is 1.3 times or more than 1.3 times the sum of the lengths of the portions of the pair of first coil end forming portions 74a and 74b with which the wires W1 are in contact when the first winding frame 7 is viewed in the axial direction of the first central axis P1. As a result, the second coil 6 in which the sum of the lengths of the first coil 5 and the two second coil end portions 62 is 1.3 times or more than 1.3 times the sum of the lengths of the two first coil end portions 52 is manufactured.

When the second winding frame 8 is viewed in the axial direction of the second central axis P2, the shortest distance L2 from the second coil end forming portion 84a of the third divided winding frame portion 81 to the second coil end forming portion 84b of the fourth divided winding frame portion 82 is equal to or longer than the axial length of the slot 4 of the stator 1. As a result, the first coil linear portion 51 longer than the axial length of the slot 4 is formed.

### (Manufacture of coil)

Next, an example of a manufacturing process of the first coil 5 and the second coil 6 using the coil manufacturing device 200 according to the embodiment will be described with reference to Fig. 5.

The wire winding unit 202 of the coil manufacturing device 200 manufactures the first coil 5 by winding the wire W1 supplied from the wire feeding unit 201 around the first winding frame 7, and manufactures the second coil 6 by winding the wire W1 around the second winding frame 8 before removing the first coil 5 from the first winding frame 7. In the manufacture of the first coil 5 and the second coil 6, a step of feeding the wire W1 to the first winding frame 7, a step of winding the wire W1 around the first winding frame 7, a step of feeding the wire W1 to the second winding frame 8, and a step of winding the wire W1 around the second winding frame 8 are executed.

First, as preprocessing, the ends of the plurality of wires W1 penetrating through the respective through holes of the delivery main body 203 are attached to the first winding frame 7. Subsequently, alignment of the delivery main body 203 is performed. Specifically, the moving motor 206 rotates before the step of feeding the wire W1 to the first winding frame 7 starts. As a result, the delivery main body 203 moves to a position where the wire W1 is fed to the first winding frame 7. After the movement of the delivery main body 203 is completed, the step of feeding the wire W1 to the first winding frame 7 by the wire feeding unit 201 is started. The step of winding the wire W1 around the first winding frame 7 is also started.

When the wire W1 is wound around the first winding frame 7, the winding motor 211 rotates the rotation shaft 210. As a result, the first winding frame 7 and the second winding frame 8 rotate. Since the delivery main body 203 is located at a position where the wire W1 is fed to the first winding frame 7, the wire W1 is wound around the first winding frame 7. The winding motor 211 rotates the first winding frame 7 a predetermined number of times. When the required number of turns of the first coil 5 is obtained, the winding motor 211 is stopped. That is, the step of winding the wire W1 around the first winding frame 7 is ended. In addition, the wire feeding unit 201 stops the feeding of the wire W1.

Before the step of feeding the wire W1 to the second winding frame 8 starts, the moving motor 206 rotates. As a result, the delivery main body 203 moves to a position where the wire W1 is fed to the second winding frame 8. In the case of the example of Fig. 5, the delivery main body 203 moves upward. After the movement of the delivery main body 203 is completed, the step of feeding the wire W1 to the second winding frame 8 by the wire feeding unit 201 is started. The step of winding the wire W1 around the second winding frame 8 is also started.

When the wire W1 is wound around the second winding frame 8, the winding motor 211 rotates the rotation shaft 210. As a result, the first winding frame 7 and the second winding frame 8 rotate. Since the delivery main body 203 is located at a position where the wire W1 is fed to the second winding frame 8, the wire W1 is wound around the second winding frame 8. The winding motor 211 rotates the second winding frame 8 a predetermined number of times. When the required number of turns of the second coil 6 is obtained, the winding motor 211 stops. That is, the step of winding the wire W1 around the second winding frame 8 is completed. The wire feeding unit 201 stops the feeding of the wire W1 to the second winding frame 8.

When the winding of the first coil 5 and the second coil 6 is completed, a cutting device (not illustrated) cuts the plurality of wires W1 at a position between the delivery main body 203 and each winding frame. After cutting the plurality of wires W1, the first coil 5 and the second coil 6 are removed from the coil manufacturing device 200. When the manufacture of the first coil 5 and the second coil 6 is continued, the ends of the plurality of cut wires W1 are attached to the first winding frame 7.

### (Coil insertion device)

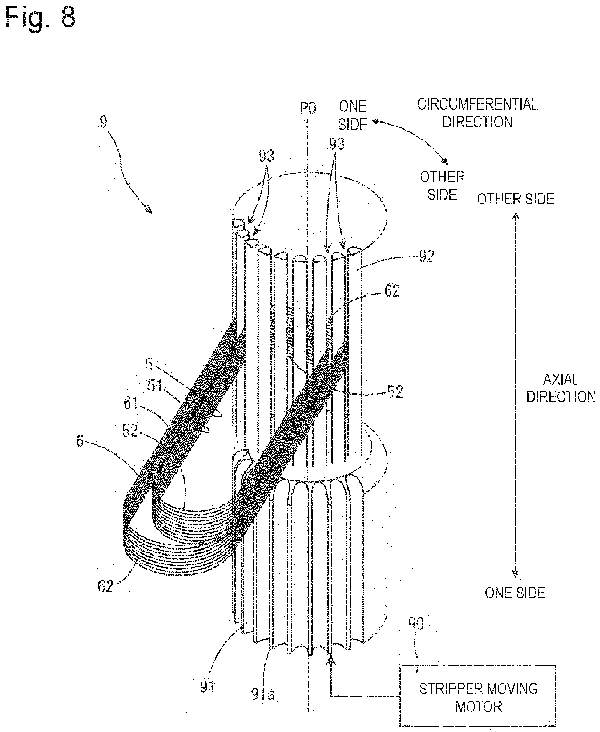

Next, an example of a coil insertion device 9 according to the embodiment will be described with reference to Figs. 8 to 11. First, the coil insertion device 9 includes a holding device (not illustrated). The holding device holds the stator core 3. The coil insertion device 9 inserts the first coil 5 and the second coil 6 manufactured by the coil manufacturing device 200 into the slot 4 from the radially inside of the stator core 3.

As illustrated in Figs. 8 to 10, the coil insertion device 9 has a stripper 91 and a plurality of blades 92. The stripper 91 has a cylindrical shape, and is inserted into the stator core 3 from one side in the axial direction of the stator core 3. The coil insertion device 9 also includes a stripper moving motor 90. The stripper moving motor 90 operates a stripper moving mechanism (not illustrated) to move the stripper 91 in the axial direction.

A plurality of protrusions 91a are provided on the outer peripheral surface of the stripper 91. The plurality of protrusions 91a extend in the axial direction and are arranged at equal intervals in the circumferential direction of the stripper 91. The protrusion 91a of the stripper 91 is located at a position passing through the opening portion 4a of the slot 4.

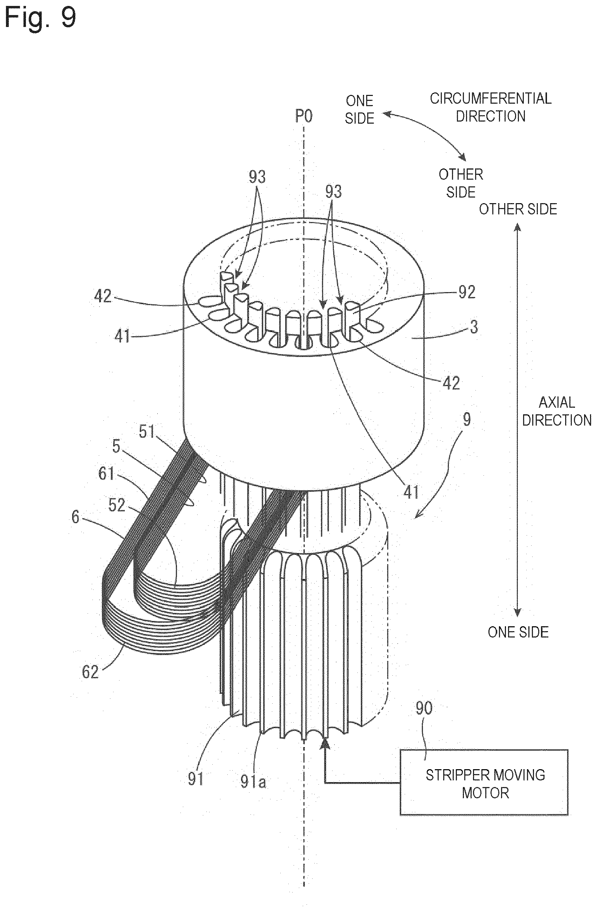

As illustrated in Figs. 8 and 9, the plurality of blades 92 has a plate shape or a rod shape and extends in the axial direction. The plurality of blades 92 are arranged in the circumferential direction. The plurality of blades 92 are arranged at intervals of a gap 93.

Each blade 92 is located inside the stator core 3 and inside the inner peripheral surface of the stripper 91. Each blade 92 is located at a position facing the teeth 32 of the stator core 3. The gap 93 between the blade 92 and the blade 92 is located at a position facing the slot 4 of the stator core 3.

An example of a process of inserting the coil 2 into the stator core 3 will be described with reference to Figs. 8 to 10. The coil insertion device 9 according to the embodiment can simultaneously insert at least two coils 2 into the stator core 3 when the stripper 91 moves once from one side to the other side in the axial direction. Therefore, an example in which the coil insertion device 9 simultaneously inserts the first coil 5 into the first coil slot 41 and inserts the second coil 6 into the second coil slot 42 will be described below. Note that only one coil 2 may be inserted into the slot 4 or three or more coils 2 may be inserted into the slot 4 by one movement of the stripper 91 from one side to the other side in the axial direction.

As illustrated in Fig. 8, the first coil 5 is inserted into the two gaps 93 across the plurality of blades 92. In the first coil 5, one of the two first coil end portions 52 formed by the first winding frame 7 is located radially inward of the blade 92. In the first coil 5, two first coil linear portions 51 formed by the other first coil end portion 52 and the first linear forming portion 73 of the first winding frame 7 are located radially outward of the blade 92.

The second coil 2 is inserted into two gaps 93 different from the gap 93 into which the first coil 5 is inserted in a state of straddling the plurality of blades 92. Specifically, the second coil 6 is inserted into the gap 93 located on one side in the circumferential direction with respect to the gap 93 located on one side in the circumferential direction in the gap 93 into which the first coil 5 is inserted. In addition, the second coil 6 is inserted into the gap 93 located at the other side in the circumferential direction of the gap 93 located at the other side in the circumferential direction of the gap 93 into which the two first coils 5 are inserted.

In the second coil 6, one of the two second coil end portions 62 formed by the second winding frame 8 is located radially inward of the blade 92. The other second coil end portion 62 and the two second coil linear portions 61 formed by the second winding frame 8 are located radially outward of the blades 92.

First, the stripper moving motor 90 moves the stripper 91 from one side to the other side in the axial direction. In the example illustrated in Figs. 8 to 10, the stripper 91 moves from bottom to top. When the stripper 91 pushes the first coil 5 and the second coil 6 in the other axial direction, the first coil 5 and the second coil 6 move in the other axial direction. In the example illustrated in Figs. 8 to 10, the first coil 5 and the second coil 6 move upward.

When the stripper 91 moves, the protrusion 91a pushes the coil 2 radially outward. As a result, the first coil linear portion 51 of the first coil 5 is inserted into the two first coil slots 41 sequentially from one side in the axial direction. The second coil linear portion 61 of the second coil 6 is inserted into the two second coil slots 42 sequentially from one side in the axial direction.

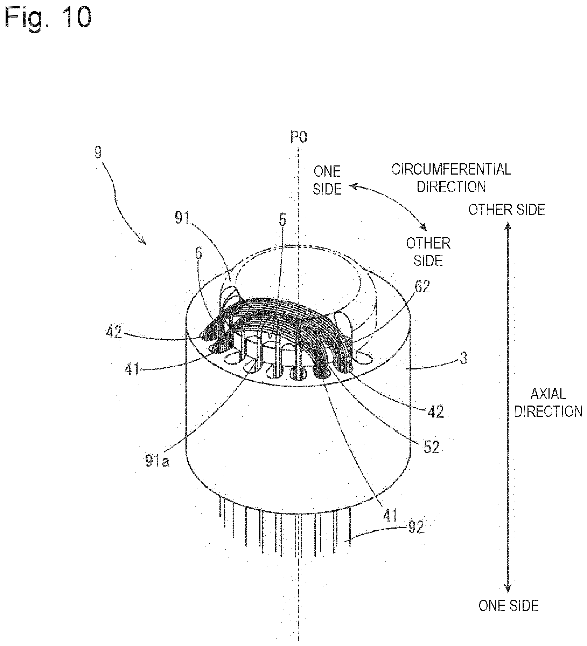

As illustrated in Fig. 10, the stripper moving motor 90 moves the stripper 91 until the first coil end portion 52 and the second coil end portion 62 on the other side in the axial direction reach predetermined positions. As a result, the first coil 5 is inserted into the two first coil slots 41. The second coil 6 is inserted into the two second coil slots 42. The first coil end portion 52 of the first coil 5 protrudes axially outward from the slot 4. The second coil end portion 62 of the second coil 6 protrudes axially outward from the slot 4.

As described above, the sum of the lengths of the two second coil end portions 62 is 1.3 times or more than 1.3 times the sum of the lengths of the two first coil end portions 52. The second coil end portion 62 is sufficiently longer than the first coil end portion 52. Therefore, as described above, when the first coil 5 and the second coil 6 are inserted into the slots of the stator core, contact between the first coil end portion 52 and the second coil 6 end is suppressed. Therefore, the force by which the coil end portion of the second coil 6 pushes the coil end portion of the first coil 5 radially inward is weak. Therefore, when the plurality of coils 2 are simultaneously inserted, each coil 2 can be smoothly inserted into the slot 4.

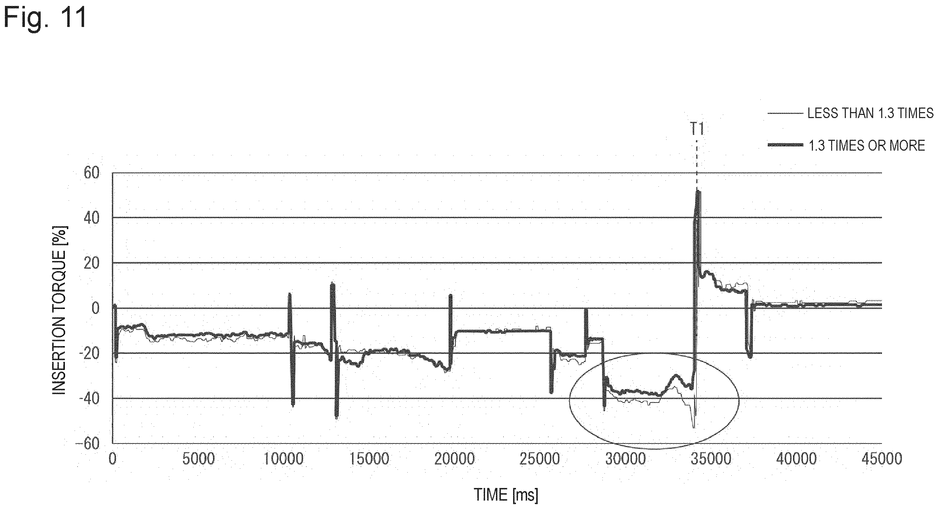

Fig. 11 is a graph illustrating an example of a temporal change in torque of the stripper moving motor 90 when the stripper 91 is moved. A thick solid line graph illustrated in Fig. 11 illustrates an example of a temporal change in torque in an embodiment in which the sum of the lengths of the two second coil end portions 62 is 1.3 times or more than 1.3 times the sum of the lengths of the two first coil end portions 52. A thin solid line graph illustrated in Fig. 11 illustrates an example of a temporal change in torque in a comparative example in which the sum of the lengths of the coil end portions of the two second coils 6 is less than 1.3 times the sum of the lengths of the coil end portions of the two first coils 5.

For example, time point T1 in Fig. 11 is a time point when the insertion of the first coil 5 and the second coil 6 into the slot 4 is completed. As indicated by the circles in Fig. 11, in the embodiment, the load of the torque of the stripper moving motor 90 is obviously suppressed as compared with the comparative example in the stage where the friction between the coil 2 and the slot 4 increases toward the completion of insertion of the first coil 5 and the second coil 6 into the slot 4. Therefore, when the sum of the lengths of the two second coil end portions 62 is 1.3 times or more than 1.3 times the sum of the lengths of the two first coil end portions 52, the first coil 5 and the second coil 6 are smoothly inserted into the first coil slot 41 and the second coil slot 42.

As described above, the stator 1 according to the embodiment includes the cylindrical stator core 3 having the plurality of slots 4 opened radially inward and arranged in the circumferential direction on the inner peripheral side, the first coil 5, and the second coil 6. The first coil 5 has an annular shape, and a part thereof is located in two first coil slots 41 among the plurality of slots 4. The second coil 6 has an annular shape, and a part thereof is located in two second coil slots 42 among the plurality of slots 4. The first coil 5 includes two first coil linear portions 51 located in the two first coil slots 41, and two first coil end portions 52 connecting the two first coil linear portions 51 axially outward of the first coil slot 41. The second coil 6 includes two second coil linear portions 61 located in the two second coil slots 42, and two second coil end portions 62 connecting the two second coil linear portions 61 axially outward of the second coil slot 42. One second coil slot 42 of the two second coil slots 42 is located on one side in the circumferential direction with respect to the first coil slot 41 located on one side in the circumferential direction of the two first coil slots 41, and the other second coil slot 42 is located on the other side in the circumferential direction with respect to the first coil slot 41 located on the other side in the circumferential direction. The sum of the lengths of the two second coil end portions 62 is 1.3 times or more than 1.3 times the sum of the lengths of the two first coil end portions 52.

The sum of the lengths of the two second coil end portions 62 is 1.3 times or more than 1.3 times the sum of the lengths of the two first coil end portions 52. Accordingly, since the second coil end portion 62 is sufficiently longer than the first coil end portion 52, contact between the first coil end portion 52 and the second coil end portion 62 is suppressed. As a result, when the second coil end portion 62 is located radially outward of the first coil end portion 52, the force by which the second coil end portion 62 pushes the first coil end portion 52 radially inward can be reduced. Therefore, the first coil 5 and the second coil 6 can be smoothly inserted into the slot 4 of the stator core 3. Therefore, the stator 1 can be efficiently produced.

The second coil slot 42 located on one side in the circumferential direction of the two second coil slots 42 is adjacent to the first coil slot 41 at a position on one side in the circumferential direction with respect to the first coil slot 41 located on one side in the circumferential direction of the two first coil slots 41. The second coil slot 42 located on the other side in the circumferential direction of the two second coil slots 42 is adjacent to the first coil slot 41 at a position on the other side in the circumferential direction with respect to the first coil slot 41 located on the other side in the circumferential direction of the two first coil slots 41.

As described above, since the first coil slot 41 and the second coil slot 42 are adjacent to each other in the circumferential direction, the second coil end portion 62 is sufficiently long with respect to the first coil end portion 52 even when the positions of the first coil 5 and the second coil 6 are close to each other. Therefore, when the second coil end portion 62 is located radially outward of the first coil end portion 52, the force by which the second coil end portion 62 pushes the first coil end portion 52 radially inward can be reduced. Therefore, the first coil 5 and the second coil 6 can be smoothly inserted into the slot 4 of the stator core 3. Therefore, the stator 1 can be efficiently produced.

The first coil end portion 52 has the first base end portion 53 which is a linear portion extending in the axial direction at a connection portion with the first coil linear portion 51. As a result, the first coil 5 is less likely to be caught by the edge of the axial end portion of the first coil slot 41 as compared with the case where the first coil end portion 52 is curved at the connection portion. Therefore, the first coil 5 can be smoothly inserted into the first coil slot 41. In addition, since the linear portion of the first coil 5 is in contact with the edge of the axial end portion of the first coil slot 41, the force applied to the first coil 5 when the first coil 5 and the edge are in contact with each other and rubbed is suppressed as compared with the case where the first coil end portion 52 is curved at the connection portion. Therefore, it is possible to obtain the stator 1 in which damage to the first coil 5 is suppressed when the first coil 5 is inserted into the first coil slot 41.

The second coil end portion 62 has the second base end portion 63 which is a linear portion extending in the axial direction at a connection portion with the second coil linear portion 61. As a result, as compared with the case where the second coil end portion 62 is curved at the connection portion, the wire W1 of the second coil 6 is less likely to be caught on the edge of the axial end portion of the second coil slot 42. Therefore, the second coil 6 can be smoothly inserted into the second coil slot 42. In addition, since the linear portion is in contact with the edge of the axial end portion of the second coil slot 42, the force applied to the wire W1 of the second coil 6 when the second coil 6 and the edge are in contact and rubbed is suppressed as compared with the case where the second coil end portion 62 is curved at the connection portion. Therefore, when the second coil 6 is inserted into the second coil slot 42, it is possible to obtain the stator 1 in which damage to the second coil 6 is suppressed.

The stator 1 has the wedge 40 extending in the axial direction to the radially inside of the two first coils 5 in the two first coil slots 41 and to the radially inside of the two second coils 6 in the two second coil slots 42.

Since the second coil end portion 62 does not push the first coil end portion 52 radially inward, a part of the first coil 5 inserted into the slot 4 does not protrude from the slot 4 or is not pushed back to the opening portion 4a of the slot 4. Therefore, when the wedge 40 is attached, the occurrence of defective insertion of the wedge 40 is suppressed. Therefore, the stator 1 can be efficiently produced.

In addition, the coil manufacturing device 200 manufactures the annular coil 2 that is open radially inward of the cylindrical stator core 3 and partially inserted into the plurality of slots 4 arranged in the circumferential direction on the inner peripheral side of the stator core 3 using the wire W1. The coil manufacturing device 200 includes the first winding frame 7 and the second winding frame 8. In the first winding frame 7, the wire W1 is wound around the first central axis P1 to form the annular first coil 5 having the pair of first coil linear portions 51 and the pair of first coil end portions 52. In the second winding frame 8, the wire W1 is wound around the second central axis P2 to form the annular second coil 6 having a pair of the second coil linear portions 61 and a pair of second coil end portions 62. The first winding frame 7 has a shape elongated in one direction when the first winding frame 7 is viewed in the axial direction of the first central axis P1. The second winding frame 8 has a shape elongated in one direction when the second winding frame 8 is viewed in the axial direction of the second central axis P2. The first winding frame 7 includes the first linear forming portion 73 that forms the first coil linear portion 51 of the first coil 5, and a pair of first coil end forming portions 74a and 74b that are located on both sides outward in the longitudinal direction of the first winding frame 7 with respect to the first linear forming portion 73 and form the first coil end portion 52 of the first coil 5. The second winding frame 8 includes the second linear forming portion 83 that forms the second coil linear portion 61 of the second coil 6, and a pair of second coil end forming portions 84a and 84b that are located on both sides outward in the longitudinal direction of the second winding frame 8 with respect to the second linear forming portion 83 and form the second coil end portion 62 of the second coil 6. When the second winding frame 8 is viewed in the axial direction of the second central axis P2, the sum of the lengths of the portions of the pair of second coil end forming portions 84a and 84b with which the wires W1 are in contact is 1.3 times or more than 1.3 times the sum of the lengths of the portions of the pair of first coil end forming portions 74a and 74b with which the wires W1 are in contact when the first winding frame 7 is viewed in the axial direction of the first central axis P1.

The sum of the lengths of the portions of the two second coil end forming portions 84a and 84b with which the wires W1 are in contact indicates the sum of the lengths of the wires W1 constituting the pair of second coil end portions 62 of the second coil 6. The sum of the lengths of the portions of the two first coil end forming portions 74a and 74b with which the wire W1 is in contact indicates the sum of the lengths of the wires W1 constituting the pair of first coil end portions 52 of the first coil 5. Since the second coil end portion 62 of the second coil 6 has a length 1.3 times or more the length of the first coil end portion 52 of the first coil 5, contact between the first coil end portion 52 and the second coil end portion 62 is suppressed. As a result, when the second coil end portion 62 is located radially outward of the first coil end portion 52, the force by which the second coil end portion 62 pushes the first coil end portion 52 radially inward can be reduced. Therefore, the first coil 5 and the second coil 6 can be smoothly inserted into the slot 4 of the stator core 3. Therefore, the stator 1 can be efficiently produced.

The first winding frame 7 includes the first divided winding frame portion 71 and the second divided winding frame portion 72. The first divided winding frame portion 71 includes the first divided linear forming portion 73a and the first coil end forming portion 74a constituting a part of the first linear forming portion 73. The second divided winding frame portion 72 includes the first divided linear forming portion 73b and the first coil end forming portion 74b constituting a part of the first linear forming portion 73. The first divided winding frame portion 71 and the second divided winding frame portion 72 face each other at positions separated from each other with the first central axis P1 interposed therebetween. When the first divided winding frame portion 71 is viewed in the axial direction of the first central axis P1, the first coil end forming portion 74a of the first divided winding frame portion 71 is located outward in the longitudinal direction of the first winding frame 7 with respect to the first divided linear forming portion 73a of the first divided winding frame portion 71. When the second divided winding frame portion 72 is viewed in the axial direction of the first central axis P1, the first coil end forming portion 74b of the second divided winding frame portion 72 is located outward in the longitudinal direction of the first winding frame 7 with respect to the first divided linear forming portion 73b of the second divided winding frame portion 72. When the first winding frame 7 is viewed in the axial direction of the first central axis P1, the shortest distance L1 from the first coil end forming portion 74a of the first divided winding frame portion 71 to the first coil end forming portion 74b of the second divided winding frame portion 72 is equal to or longer than the length of the slot 4 in the axial direction of the stator 1.

The first coil linear portion 51 is formed between the pair of first coil end forming portions 74a and 74b. The shortest distance L1 from the first coil end forming portion 74a of the first divided winding frame portion 71 to the first coil end forming portion 74b of the second divided winding frame portion 72 is equal to or longer than the length of the slot 4 in the axial direction of the stator 1. Therefore, the first coil linear portion 51 of the first coil 5 formed in the first winding frame 7 is equal to or longer than the length of the slot 4 in the axial direction of the stator core 3. Therefore, the first coil linear portion 51 can be smoothly inserted into the slot 4. Therefore, the stator 1 can be efficiently produced.

The first coil end forming portion 74a of the first divided winding frame portion 71 includes the first coil end contact portion 75 having a narrower width toward the center in the direction orthogonal to the longitudinal direction of the first winding frame 7, as it goes outward in the longitudinal direction of the first winding frame 7, toward the outside of the first winding frame 7 in the longitudinal direction when the first divided winding frame portion 71 is viewed in the axial direction of the first central axis P1. The first coil end forming portion 74b of the second divided winding frame portion 72 includes the second coil end contact portion 76 having a narrower width toward the center in the direction intersecting the longitudinal direction of the first winding frame 7, as it goes outward in the longitudinal direction of the first winding frame 7, toward the outside of the first winding frame 7 in the longitudinal direction when the second divided winding frame portion 72 is viewed in the axial direction of the first central axis P1.

The first coil end contact portion 75 and the second coil end contact portion 76 of the first winding frame 7 are narrower toward the center in the direction intersecting the longitudinal direction of the first winding frame 7 as it goes outward in the longitudinal direction of the first winding frame 7. Therefore, the volume of the first coil end portion 52 of the formed first coil 5 can be suppressed. Therefore, the compact stator 1 can be efficiently produced.

The second winding frame 8 includes the third divided winding frame portion 81 and the fourth divided winding frame portion 82. The third divided winding frame portion 81 includes the second divided linear forming portion 83a and the second coil end forming portion 84a constituting a part of the second linear forming portion 83. The fourth divided winding frame portion 82 includes the second divided linear forming portion 83b and the second coil end forming portion 84b constituting a part of the second linear forming portion 83. The third divided winding frame portion 81 and the fourth divided winding frame portion 82 face each other at positions separated from each other with the second central axis P2 interposed therebetween. When the third divided winding frame portion 81 is viewed in the axial direction of the second central axis P2, the second coil end forming portion 84a of the third divided winding frame portion 81 is located outward in the longitudinal direction of the second winding frame 8 with respect to the second divided linear forming portion 83a of the third divided winding frame portion 81. When the fourth divided winding frame portion 82 is viewed in the axial direction of the second central axis P2, the second coil end forming portion 84b of the fourth divided winding frame portion 82 is located outward in the longitudinal direction of the second winding frame 8 with respect to the second divided linear forming portion 83b of the fourth divided winding frame portion 82. The shortest distance L2 from the second coil end forming portion 84a of the third divided winding frame portion 81 to the second coil end forming portion 84b of the fourth divided winding frame portion 82 is equal to or longer than the length of the slot 4 in the axial direction of the stator 1.

The second coil linear portion 61 is formed between the pair of second coil end forming portions 84a and 84b. The shortest distance L2 from the second coil end forming portion 84a a of the third divided winding frame portion 81 to the second coil end forming portion 84b of the fourth divided winding frame portion 82 is equal to or longer than the length of the slot 4 in the axial direction of the stator 1. Therefore, the second coil linear portion 61 of the second coil 6 formed in the second winding frame 8 is equal to or longer than the length of the slot 4 in the axial direction of the stator core 3. Therefore, the second coil linear portion 61 can be smoothly inserted into the slot 4. Therefore, the stator 1 can be efficiently produced.

When the third divided winding frame portion 81 is viewed in the axial direction of the second central axis P2, the second coil end forming portion 84a of the third divided winding frame portion 81 is located outward in the longitudinal direction of the second winding frame 8 with respect to the second linear forming portion 83 of the third divided winding frame portion 81, and includes, outside the second winding frame 8 in the longitudinal direction, the third coil end contact portion 85 having a narrower width toward the center in the direction orthogonal to the longitudinal direction of the second winding frame 8 as it goes outward in the longitudinal direction of the second winding frame 8. When the fourth divided winding frame portion 82 is viewed in the axial direction of the second central axis P2, the second coil end forming portion 84b of the fourth divided winding frame portion 82 is located outward in the longitudinal direction of the second winding frame 8 with respect to the second linear forming portion 83 of the fourth divided winding frame portion 82, and includes, outside the second winding frame 8 in the longitudinal direction, the fourth coil end contact portion 86 having a narrower width toward the center in the direction intersecting the longitudinal direction of the second winding frame 8 as it goes outward in the longitudinal direction of the second winding frame 8.

The third coil end contact portion 85 and the fourth coil end contact portion 86 of the second winding frame 8 are narrower toward the center in the direction intersecting the longitudinal direction of the second winding frame 8 as it goes outward in the longitudinal direction of the second winding frame 8. Therefore, the volume of the formed second coil end portion 62 can be suppressed. Therefore, the compact stator 1 can be efficiently produced.

### <Other embodiments>

The foregoing description concerns embodiments of the present invention; however, each of the foregoing embodiments is merely an example for embodying the present invention. Accordingly, the present invention is not limited to the embodiment described above, and the embodiment described above may be appropriately modified and implemented without departing from the scope of the present invention.

In the above embodiment, the first coil end portion 52 has the first base end portion 53 which is a linear portion extending in the axial direction at a connection portion with the first coil linear portion 51. However, in the first coil end portion, a connection portion with the first coil linear portion may not be a straight line.

In the above embodiment, the second coil end portion 62 has the second base end portion 63 which is a linear portion extending in the axial direction at a connection portion with the second coil linear portion 61. However, in the second coil end portion, the connection portion with the second coil linear portion may not be a straight line.

In the above embodiment, the first winding frame 7 is divided into the first divided winding frame portion 71 and the second divided winding frame portion 72. The second winding frame 8 is divided into a third divided winding frame portion 81 and a fourth divided winding frame portion 82. However, the first winding frame and the second winding frame may not be divided.

In the above embodiment, the first coil end contact portion 75 of the first winding frame 7 has a trapezoidal shape when the first winding frame 7 is viewed in the axial direction of the first central axis P1. The second coil end contact portion 76 has a curved surface protruding outward in the longitudinal direction of the first winding frame 7. However, both the first coil end contact portion and the second coil end contact portion may have a trapezoidal shape when the first winding frame is viewed in the axial direction of the first central axis, or may have a curved surface protruding outward in the longitudinal direction of the first winding frame.

In the above embodiment, the third coil end contact portion 85 of the second winding frame 8 has a trapezoidal shape when the second winding frame 8 is viewed in the axial direction of the second central axis P2. The fourth coil end contact portion 86 has a curved surface protruding outward in the longitudinal direction of the second winding frame 8. However, both the third coil end contact portion and the fourth coil end contact portion may have a trapezoidal shape when the second winding frame is viewed in the axial direction of the second central axis, or may have a curved surface protruding outward in the longitudinal direction of the second winding frame.

In the above embodiment, the first winding frame 7 and the second winding frame 8 are rotated by the rotation of the rotation shaft 210 connected to the winding frame support 209 that supports the first winding frame 7 and the second winding frame 8. However, the first winding frame and the second winding frame may not rotate, and the wire feeding unit may rotate around the first winding frame and the second winding frame.

In the above embodiment, the first winding frame 7 and the second winding frame 8 are rotated by one rotation shaft 210. However, each of the first winding frame and the second winding frame may be rotated by different rotation shafts.

In the above embodiment, the delivery portion support 204 includes the moving motor 206, the ball screw 207, and the slide table 208. However, the configuration for moving the delivery main body may be, for example, a robot arm, or may be any configuration as long as the delivery main body can be moved.

### Industrial Applicability

The present invention is applicable to a stator and a coil manufacturing device for manufacturing a coil for the stator.

### Reference Signs List

- 100: motor
- 101: rotor
- 1: stator
- 2: coil
- 3: stator core
- 31: core back
- 32: teeth
- 4: slot
- 4a: opening
- 40: wedge
- 41: first coil slot
- 42: second coil slot
- 5: first coil
- 51: first coil linear portion
- 52: first coil end portion
- 53: first base end portion
- 6: second coil
- 61: second coil linear portion
- 62: second coil end portion
- 63: second base end portion
- 7: first winding frame
- 71: first divided winding frame portion
- 72: second divided winding frame portion
- 73: first linear forming portion
- 73a, 73b: first divided linear forming portion
- 74a, 74b: first coil end forming portion
- 75: first coil end contact portion
- 76: second coil end contact portion
- 8: second winding frame
- 81: third divided winding frame portion
- 82: fourth divided winding frame portion
- 83: second linear forming portion
- 83a, 83b: second divided linear forming portion
- 84a, 84b: second coil end forming portion
- 85: third coil end contact portion
- 86: fourth coil end contact portion
- 9: coil insertion device
- 90: stripper moving motor
- 91: stripper
- 91a: protrusion
- 92: blade
- 93: gap
- 200: coil manufacturing device
- 201: wire-feeding unit
- 202: wire winding unit
- 203: delivery main body
- 204: delivery portion support
- 205: delivery portion moving unit
- 206: moving motor
- 207: ball screw
- 208: slide table
- 209: winding frame support
- 210: rotation shaft
- 211: winding motor
- L1: shortest distance
- L2: shortest distance
- P0: central axis
- P1: first central axis
- P2: second central axis
- T1: time point
- W1: wire

## Claims

1. A stator (1) comprising:
a cylindrical stator core (3) having a plurality of slots (4) that open radially inward and are arranged in a circumferential direction on an inner peripheral side;
a first coil (5) having an annular shape and partially located in two first coil slots (41) of the plurality of slots (4); and
a second coil (6) having an annular shape and partially located in two second coil slots (42) of the plurality of slots (4), wherein
the first coil (5) includes:
two first coil linear portions (51) located in the two first coil slots (41); and
two first coil end portions (52) connecting the two first coil linear portions (51) axially outward of the first coil slot (41),
the second coil (6) includes:
two second coil linear portions (61) located in the two second coil slots (42); and
two second coil end portions (62) connecting the two second coil linear portions (61) axially outward of the second coil slot (42),
one second coil slot (42) of the two second coil slots (42) is located on one side in the circumferential direction with respect to the first coil slot (41) located on one side in the circumferential direction of the two first coil slots (41), and another second coil slot (42) is located on another side in the circumferential direction with respect to the first coil slot (41) located on another side in the circumferential direction, and
a sum of lengths of the two second coil end portions (62) is 1.3 times or more than 1.3 times a sum of lengths of the two first coil end portions (52).

2. The stator (1) according to claim 1, wherein
a second coil slot (42) located on one side in the circumferential direction of the two second coil slots (42) is adjacent to the first coil slot (41) at a position on one side in the circumferential direction with respect to a first coil slot (41) located on one side in the circumferential direction of the two first coil slots (41), and
a second coil slot (42) located on another side in the circumferential direction of the two second coil slots (42) is adjacent to the first coil slot (41) at another position in the circumferential direction with respect to a first coil slot (41) located on another side in the circumferential direction of the two first coil slots (41).

3. The stator (1) according to claim 1 or 2, wherein the first coil end portion (52) has a first base end portion (53) which is a linear portion extending in an axial direction at a connection portion with the first coil linear portion (51).

4. The stator (1) according to claim 1 or 2, wherein the second coil end portion (62) has a second base end portion (63) which is a linear portion extending in an axial direction at a connection portion with the second coil linear portion (61).

5. The stator (1) according to claim 1 or 2, further comprising:
a wedge (40) extending in an axial direction on a radially inside of the two first coil linear portions (51) in the two first coil slots (41) and on a radially inside of the two second coil linear portions (61) in the two second coil slots (42).

6. A coil manufacturing device (200) for manufacturing an annular coil (2) using a wire (W1), the coil (2) being open radially inward of a cylindrical stator core (3) and partially inserted into a plurality of slots (4) arranged in a circumferential direction on an inner peripheral side of the stator core (3), the coil manufacturing device (200) comprising:
a first winding frame (7) that forms an annular first coil (5) having a pair of first coil linear portions (51) and a pair of first coil end portions (52) by winding the wire (W1) around a first central axis (P1); and
a second winding frame (8) that forms an annular second coil (6) having a pair of second coil linear portions (61) and a pair of second coil end portions (62) by winding the wire (W1) around a second central axis (P2), wherein
the first winding frame (7) has a shape elongated in one direction when the first winding frame (7) is viewed in an axial direction of the first central axis (P1),
the second winding frame (8) has a shape elongated in one direction when the second winding frame (8) is viewed in the axial direction of the second central axis (P2),
the first winding frame (7) includes:
a first linear forming portion (73) that forms the first coil linear portion (51) of the first coil (5); and
a pair of first coil end forming portions (74a, 74b) that is located on both sides outward in a longitudinal direction of the first winding frame (7) with respect to the first linear forming portion (73), and forms the first coil end portion (52) of the first coil (5),
the second winding frame (8) includes:
a second linear forming portion (83) that forms the second coil linear portion (61) of the second coil (6); and
a pair of second coil end forming portions (84a, 84b) that is located on both sides outward in a longitudinal direction of the second winding frame (8) with respect to the second linear forming portion (83), and forms the second coil end portion (62) of the second coil (6), and
when the second winding frame (8) is viewed in an axial direction of the second central axis (P2), a sum of lengths of portions of the pair of second coil end forming portions (84a, 84b) with which the wire (W1) is in contact is 1.3 times or more than 1.3 times a sum of lengths of portions of the pair of first coil end forming portions (74a, 74b) with which the wire (W1) is in contact when the first winding frame (7) is viewed in an axial direction of the first central axis (P1).

7. The coil manufacturing device (200) according to claim 6, wherein
the first winding frame (7) includes a first divided winding frame portion (71) and a second divided winding frame portion (72) respectively including a first divided linear forming portion (73a, 73b) and the first coil end forming portion (74a, 74b) constituting a part of the first linear forming portion (73),
the first divided winding frame portion (71) and the second divided winding frame portion (72) face each other at positions separated from each other with the first central axis (P1) interposed therebetween,
the first coil end forming portion (74a, 74b) of the first divided winding frame portion (71) is located outward in a longitudinal direction of the first winding frame (7) with respect to the first divided linear forming portion (73a, 73b) of the first divided winding frame portion (71) when the first divided winding frame portion (71) is viewed in an axial direction of the first central axis (P1),
the first coil end forming portion (74a, 74b) of the second divided winding frame portion (72) is located outward in a longitudinal direction of the first winding frame (7) with respect to the first divided linear forming portion (73a, 73b) of the second divided winding frame portion (72) when the second divided winding frame portion (72) is viewed in an axial direction of the first central axis (P1), and
when the first winding frame (7) is viewed in an axial direction of the first central axis (P1), a shortest distance from the first coil end forming portion (74a, 74b) of the first divided winding frame portion (71) to the first coil end forming portion (74a, 74b) of the second divided winding frame portion (72) is equal to or longer than a length of the slot in an axial direction of the stator (1).

8. The coil manufacturing device (200) according to claim 7, wherein
the first coil end forming portion (74a, 74b) of the first divided winding frame portion (71) includes, outside the first winding frame (7) in a longitudinal direction, a first coil end contact portion (75) having a narrower width toward a center in a direction orthogonal to a longitudinal direction of the first winding frame (7) as the first coil end contact portion (75) goes outward in a longitudinal direction of the first winding frame (7) when the first divided winding frame portion (71) is viewed in an axial direction of the first central axis (P1), and
the first coil end forming portion (74a, 74b) of the second divided winding frame portion (72) includes, outside the first winding frame (7) in a longitudinal direction, a second coil end contact portion (76) having a narrower width toward a center in a direction intersecting a longitudinal direction of the first winding frame (7) as the second coil end contact portion (76) goes outward in a longitudinal direction of the first winding frame (7) when the second divided winding frame portion (72) is viewed in the axial direction.

9. The coil manufacturing device (200) according to claim 6 or 7, wherein
the second winding frame (8) includes a third divided winding frame portion (81) and a fourth divided winding frame portion (82) respectively including a second divided linear forming portion (83a, 83b) and the second coil end forming portion (84a, 84b) constituting a part of the second linear forming portion (83),
the third divided winding frame portion (81) and the fourth divided winding frame portion (82) face each other at positions separated from each other with the second central axis (P2) interposed therebetween,
the second coil end forming portion (84a, 84b) of the third divided winding frame portion (81) is located outward in the longitudinal direction of the second winding frame (8) with respect to the second divided linear forming portion (83a, 83b) of the third divided winding frame portion (81) when the third divided winding frame portion (81) is viewed in an axial direction of the second central axis (P2),
the second coil end forming portion (84a, 84b) of the fourth divided winding frame portion (82) is located outward in a longitudinal direction of the second winding frame (8) with respect to the second divided linear forming portion (83a, 83b) of the fourth divided winding frame portion (82) when the fourth divided winding frame portion (82) is viewed in an axial direction of the second central axis (P2), and
when the second winding frame (8) is viewed in an axial direction of the second central axis (P2), a shortest distance from the second coil end forming portion (84a, 84b) of the third divided winding frame portion (81) to the second coil end forming portion (84a, 84b) of the fourth divided winding frame portion (82) is equal to or longer than a length of the slot in an axial direction of the stator (1).

10. The coil manufacturing device (200) according to claim 9, wherein
the second coil end forming portion (84a, 84b) of the third divided winding frame portion (81) is located outward in a longitudinal direction of the second winding frame (8) with respect to the second linear forming portion (83) of the third divided winding frame portion (81) when the third divided winding frame portion (81) is viewed in an axial direction of the second central axis (P2), and includes, outside the second winding frame (8) in the longitudinal direction, a third coil end contact portion (85) having a narrower width toward a center in a direction orthogonal to a longitudinal direction of the second winding frame (8) as the third coil end contact portion (85) goes outward in a longitudinal direction of the second winding frame (8), and
the second coil end forming portion (84a, 84b) of the fourth divided winding frame portion (82) is located outward in a longitudinal direction of the second winding frame (8) with respect to the second linear forming portion (83) of the fourth divided winding frame portion (82) when the fourth divided winding frame portion (82) is viewed in an axial direction of the second central axis (P2), and includes, outside the second winding frame (8) in a longitudinal direction, a fourth coil end contact portion (86) having a narrower width toward a center in a direction intersecting a longitudinal direction of the second winding frame (8) as the fourth coil end contact portion (86) goes outward in a longitudinal direction of the second winding frame (8).
